# EUROPEAN PATENT SPECIFICATION

(11) **EP 2 137 268 B1**
(45) Date of publication and mention of the grant of the patent: **03.06.2015**
(21) Application number: 08749571.9
(22) Date of filing: 16.04.2008
(51) Int. Cl.: C09D 5/10, C09D 7/12, C09D 1/02, C08K 3/36, C08K 9/06

(54) **COATING COMPOSITION FOR METAL SUBSTRATES**
BESCHICHTUNGSZUSAMMENSETZUNG FÜR METALLSUBSTRATE
COMPOSITION DE REVÊTEMENT POUR SUBSTRATS MÉTALLIQUES

(30) Priority: 19.04.2007 EP 07106524; 02.05.2007 US 927371 P
(43) Date of publication of application: 30.12.2009
(73) Proprietor: Akzo Nobel Coatings International BV, 6824 BM Arnhem (NL)
(72) Inventor: BROWNE, Victoria, Westoe Crown Village NE33 3NY (GB); JACKSON, Paul Anthony, Chester-le-street Durham DH2 3TD (GB); REID, Alistair James, South Shields Tyne & Wear NE33 3BB (GB); GREENWOOD, Peter Harry Johan, S-413 18 Göteborg (SE)
(74) Representative: Akzo Nobel IP Department
(86) International application number: PCT/EP2008/054573
(87) International publication number: WO 2008/128932

(56) References cited:
- WO-A-00/55260
- WO-A-02/22745
- WO-A-03/072660
- WO-A1-03/022940
- WO-A1-2004/035473
- US-A- 4 162 169

## Description

This invention relates to a coating composition that can be used for the coating of metal substrates, for example steel substrates. In particular, it relates to a coating composition for semi-finished steel products which are subsequently to be fabricated by heat-intensive processes and overcoated. Such semi-finished steel products are used in the shipbuilding industry and for the manufacture of large-scale structures such as oil production platforms. They include steel plates, for example of thickness 6 to 75 mm, bars, girders and various steel sections used as stiffening members. The most important heat-intensive process is welding; substantially all semi-finished steel products are welded. Other important heat-intensive processes are cutting, for example oxy-fuel cutting, plasma cutting or laser cutting, and heat fairing, where the steel is bent into shape while being heated. These steel products are often exposed to the weather during storage and construction, and they are generally coated with a coating called a "shop primer" or "pre-construction coating" to avoid corrosion of the steel before the steel construction, e.g. the ship, is given its full coating of anticorrosive paint. This avoids the problem of having to overcoat or remove steel corrosion products. In most big shipyards, the shop primer is applied as one of several treatments carried out on a production line in which the steel is for example preheated, shot- or grit-blasted to remove millscale and corrosion products, shop primed, and passed through a drying booth. Alternatively, the shop primer can be applied by a trade coater or steel supplier before the steel is delivered to the shipyard or other construction site.

Although the main purpose of the shop primer is to provide temporary corrosion protection during construction, it is preferred by shipbuilders that the shop primer does not need to be removed but can remain on the steel during and after fabrication. Steel coated with the shop primer thus needs to be weldable without removal of the shop primer and to be overcoatable with the types of protective anti-corrosive coatings generally used on ships and other steel constructions, with good adhesion between the primer and the subsequently applied coating. The shop primed steel should preferably be weldable without any significant detrimental effect on the quality of the weld or on the speed of the welding process and should be sufficiently resistant to heat for the shop primer to retain its anticorrosive properties in areas heated during fairing or during welding of the opposite face of the steel.

Commercially successful shop primers available today are solvent borne coatings based on pre-hydrolysed tetraethyl orthosilicate binders and zinc powder. Such coatings contain a large proportion of volatile organic solvent, typically about 650 grams per litre, to stabilise the paint binder and to enable the product to be applied as a thin film, typically of about 20 microns thick. Release of volatile organic solvent can be harmful to the environment and is regulated by legislation in many countries. Examples of shop primers which release no, or much less volatile organic solvent are described in US-A-4,888,056 and JP-A-07-70476.

JP-A-06-200188 is concerned with shop primer coatings and mentions the possibility of using an aqueous alkali silicate salt-type, binder. Coatings comprising an aqueous alkali metal silicate and zinc powder are also proposed in GB-A-1226360, GB-A-1007481, GB-A-997094, US-A-4,230,496, and JP-A-55-106271. Alkali silicate binders for anticorrosive coatings are also mentioned in US-A-3,522,066, US-A-3,620,784, US-A-4,162,169, and US-A-4,479,824.
In EP-A-295 834 coatings containing a mixture of alkali metal silicate with a minor amount of colloidal silica, Al₂O₃ powder as filler, and metal powder as toughening agent are mentioned. Although primer coatings based on an aqueous alkali silicate binder and zinc powder can give adequate corrosion protection and allow the steel surfaces they cover to be welded, they give rise to problems when overcoated. The aqueous silicates contain a large quantity of alkali metal cations required to keep the silicate in solution and these ions are still present in the coating after it has dried. If primer coatings having these large quantities of alkali metal ions are overcoated with any conventional organic coating and then immersed in water, blistering (local delamination of the coating) occurs. Although this problem can be reduced if the coating is weathered outside for some time after application of the shop primer or washed prior to overcoating, such processes are not compatible with use in today's high-productivity shipyards.

Another development is the use of shop primers containing an aqueous silica sol binder. A silica sol is a stable dispersion of discrete, colloid-size particles of amorphous silica in aqueous solution. Silica sols are generally stable at a pH in the range of about 7 to 11. Below about pH 7, the negative charge on the silica particles is too low to prevent aggregation; above about pH 11 silica starts to dissolve. The negative surface charge on the silica particles is neutralized by soluble (alkali metal) salts, that form an electric double layer around the particles.
Silica sols differ from the alkali metal silicate salt-type binders discussed before in that the latter do not contain discrete colloid-size particles of amorphous silica neutralized by alkali metal ions. Instead, alkali metal silicates are reaction products of alkali metal and silicate and form clear transparent solutions.
A silica sol differs from a silica hydrogel in that its silica particles are discrete, whereas the silica particles in a hydrogel form a network.

Aqueous silica sols having very low alkali metal content are available commercially, but coatings based on the conventionally used large sols, which in general are larger than 25 nm, normally have very poor (initial) film strength in terms of adhesion, cohesion, hardness, and resistance to abrasion and water. These poor physical properties of the coating make it susceptible to damage during handling or further processing. This brings the potential requirement of significant coating repair with major cost implications.

WO 2004/035473 discloses a method of producing a stable substantially aqueous silanized colloidal silica dispersion having a silica content of at least about 20 wt%, comprising mixing at least one silane compound and colloidal particles, wherein the weight ratio of silane to silica is from about 0.003 to about 0.2.

Suggested improvements to silica sol coatings are: the addition of a water-immiscible organic amine (US-A-3,320,082), addition of a water-soluble acrylamide polymer (GB-A-1541022), addition of a quaternary ammonium or alkali metal silicate (GB-A-1485169), and addition of clay materials and/or metal oxides such as Al₂O₃, and aluminium biphosphate and/or ethyl silicate (JP-A-55-100921). However, such coatings have not achieved physical properties similar to those of coatings based on alkali metal silicates. Coatings based on the conventionally used large silica sols, which in general are larger than 25 nm, show low levels of blistering when overcoated/immersed. Although the water-soluble salt content and the osmotic pressure are low, blistering can still occur, because due to its poor physical properties the coating exhibits little resistance to blister initiation/growth.

In WO 00/055260, WO 00/055261, WO 02/022745, WO 02/022746, and WO 03/022940 shop primers comprising an aqueous silica sol having a SiO₂/M₂O ratio of at least 6:1 are disclosed, wherein M represents the total of alkali metal and ammonium ions. The shop primer of WO 03/022940 may even contain a silane coupling agent.
These coatings, once applied, show a rapid development of film properties, such as hardness, and the cured coatings have good physical properties (e.g. good resistance to blister initiation/growth when overcoated/immersed). However, for these known coating compositions the pot life is normally restricted to a few hours. For specific compositions the pot life can be extended by using alumina-modified silica sols; a higher level of alumina modification results in a longer pot life.

An additional problem associated with the above known shop primers is their low resistance to white rust formation. White rust is the accumulation of appreciable volumes of soft, white, fluffy, non-protective zinc corrosion products - e.g. zinc hydroxide, zinc carbonate and/or zinc hydroxycarbonate - on zinc-containing coating surfaces.

It has now been found that a coating composition with a relatively long pot life, good white rust resistance, and good film properties can be obtained by using a silica sol modified with 8-18 wt% of one or more silane compounds.

It was further found that suitable modification could only be obtained if the silane compound(s) was/were added to the silica sol with a rate of not more than 20 silane molecules per nm² colloidal silica surface per hour.

The present invention therefore relates to a coating composition suitable for coating a metal, preferably steel, substrate which is intended to be fabricated and overcoated, said composition comprising (i) zinc powder and/or a zinc alloy and (ii) a modified silica sol comprising colloidal silica particles modified with 8-18 wt% of one or more silane compounds, based on the combined dry weight of silane compound(s) and colloidal silica particles, and being obtainable by adding said silane compound(s) to a silica sol with a rate of not more than 20 silane molecules per nm² colloidal silica surface per hour, and wherein said one or more silane compound(s) is/are pre-hydrolysed.

It was found that in the silane-modified silica sol silane groups are covalently bonded to the surface of the colloidal silica particles.

The preparation of the silane-modified silica sol can be performed without environmental hazard or health problems for process operators handling the dispersions.

Tests with different levels of silane modification have shown that modification of the silica sol with less than 6 wt% of silane does not improve the white rust resistance, while the use of more than 40 wt% silane is practically impossible.

The silica sol is modified with at least 8 wt%, more preferably at least 14 wt% of silane compound(s). The maximum amount of silane compound to be used is 18 wt%, because at higher levels of silane modification a reduction of the film properties is observed.
The silane addition rate preferably is at least 0.01, more preferably at least 0.1, even more preferably at least 0.5, and most preferably at least 1 silane molecule(s) per nm² colloidal silica surface per hour. The silane addition rate is not higher than 20, preferably not higher than 15, more preferably not higher than 10, even more preferably not higher than 5, even more preferably not higher than 3, and most preferably not higher than 2 silane molecules per nm² colloidal silica surface per hour. The preferred rate depends on the temperature applied to the silica sol during the addition (higher temperatures allow faster addition) and the type of silane compound (easy hydrolysing silanes like methoxy silanes allow faster addition than less easy hydrolysing silanes like ethoxysilanes).
The colloidal silica surface area is determined by the titration method described in G.W. Sears, Analytical Chemistry, Vol 28(12), pp. 1981-1983 (1956)).

Without being bound to theory, the positive effect of this slow addition of silane on the resulting properties of the modified silica sol is probably due to a reduced ability of the silane compound to self-condense and produce pseudo sol particles or silica gels, and therefore, increased ability to react with the surface of the sol particles.

It should be noted that WO 03/022940 also discloses the presence of a silane compound in a shop primer. However, according to this document, the silane compound is simply added to the coating composition. It is not as slowly added to the silica sol as required by the present invention.

The addition of the silane compound(s) to the silica sol generally takes at least 20 minutes, preferably at least 30 minutes. It preferably takes up to 5 hours, more preferably for up to 3 hours, most preferably up to 2 hours
After the addition of the silane compound(s) to the colloidal sol, the mixing preferably continues from about 1 second to about 30 minutes, preferably from about 1 minute to about 10 minutes.
The addition is preferably carried out continuously and at any suitable temperature in the range 20-100°C, although a temperature above 30°C is preferred. More preferably, this temperature is in the range 35-95°C, even more preferably 50-75°C, and most preferably 60-70°C.

Continuous addition of the silane compound(s) to the silica sol can be of particular importance when preparing highly concentrated silane-modified silica sols having a silica content up to about 80 wt%, based on total weight of the sol. However, the silica content suitably is from about 20 to about 80, preferably from about 25 to about 70, and most preferably from about 30 to about 60 wt%.

Preferably, at least 60, more preferably at least about 75, even more preferably at least about 90, and most preferably at least about 95 wt% of the silane compound(s) present in the silane-modified silica sol is/are bound or linked to the surface of the colloidal silica particles, e.g. by means of covalent or hydrogen bonding. This value can be determined by ²⁹Si-NMR.

The silane compound(s) is/are diluted before mixing with the silica sol, preferably with water at a temperature up to 80°C to form a pre-mix of silane compound(s) and water. This pre-mix of silane compound(s) and water can also be referred to as a pre-hydrolysed silane. The silane compound(s) is/are suitably diluted with water in a weight ratio of from about 1:8 to about 8:1, preferably from about 3:1 to about 1:3, and most preferably from about 1.5:1 to about 1:1.5. The resulting silane-water solution is substantially clear and stable and easy to mix with the colloidal silica particles. By "stable" is meant a stable compound, mixture or dispersion that does not substantially gel or precipitate within a period of preferably at least about 2 months, more preferably at least about 4 months, and most preferably at least about 5 months at normal storage at room temperature, i.e. at a temperature from about 15 to about 35°C. The silane-modified silica sol and the coating composition based on such sol are also stable as such. The silane-modified silica sol preferably has a shelf life of at least 6 months, ideally at least 12 months.

The colloidal silica particles present in the silica sol that is used to prepare the silane-modified silica sol can be derived from, e.g., precipitated silica, micro silica (silica fume), pyrogenic silica (fumed silica) or silica gels with sufficient purity, and mixtures thereof. The silane-modified silica sol and the silica sol used to prepare the silane-modified silica sol can contain other elements such as amines, aluminium, and/or boron. These elements can be present in or on the colloidal silica particles and/or in the continuous phase, i.e. the dispersing liquid. Boron-modified silica sols are described in, e.g., US 2,630,410. Alumina-modified silica particles suitably have an Al₂O₃ content of from about 0.05 to about 3 wt%, preferably from about 0.1 to about 2 wt%. In alumina-modified sols, the surface of the colloidal silica particles is modified by sodium aluminate bound to the particles. The procedure of preparing an alumina-modified silica sol is further described in, e.g., K. Ralph Iler, The Chemistry of Silica, pages 407-409, John Wiley & Sons (1979) and in US 5,368,833.

The colloidal silica particles present in the silica sol that is used to prepare the silane-modified silica sol suitably have an average particle diameter below 100 nm, in particular ranging from about 3 to about 22 nm, preferably from about 3 to about 16 nm, and most preferably from about 5 to about 12 nm, as determined from specific surface area measurements using the titration method described by Sears (for reference: see above) before silane modification. Suitably, the colloidal silica particles, before silane modification, have a surface area from about 20 to about 1,500, preferably from about 50 to about 900, more preferably from about 70 to about 600 m²/g, and most preferably from about 200 to about 500 m²/g.
The colloidal silica particles preferably have a narrow particle size distribution, i.e. a low relative standard deviation from the mean particle size. This relative standard deviation is the ratio of the standard deviation to the mean particle size by numbers. The relative standard deviation is preferably lower than about 60% by numbers, more preferably lower than about 30% by numbers, and most preferably lower than about 15% by numbers.

The colloidal silica particles present in the silica sol that is used to prepare the silane-modified silica sol are suitably dispersed in an aqueous liquid, preferably in the presence of stabilising cations originating from for example sodium, potassium, or lithium hydroxide, quaternary ammonium hydroxide, or water-soluble organic amines such as alkanolamine, or mixtures thereof, so as to form an aqueous silica sol. Aqueous silica sols without any further solvents are preferably used. Preferably, the colloidal silica particles are negatively charged. Suitably, the silica content in the sol is from about 20 to about 80, preferably from about 25 to about 70, and most preferably from about 30 to about 60 wt%. The pH of the silica sol prior to silane modification preferably is at least about 7, more preferably at least about 7.5, and its is preferably less than 11, more preferably less than about 10.5. However, for alumina-modified silica sols the pH suitably is from about 1 to about 12, preferably from about 3.5 to about 11.

The silica sol preferably has a low level of agglomeration. This can be determined by ascertaining the S-value of the sol. The S-value can be measured and calculated as described by Iler & Dalton in J. Phys. Chem. Vol. 60 (1956), 955-975. The silica content, the volume of the dispersed phase, the density, and the viscosity of the silica sol affect the S-value. A low S-value can be considered to indicate a high degree of particle aggregation or inter-particle attraction. The silica sol used to prepare the coating composition according to the present invention can have a S-value of 20-100%, preferably 30-90%, even more preferably 50-85%.

Suitable silane compounds for the preparation of the silane-modified silica sol include tris-(trimethoxy)silane, octyl triethoxysilane, methyl triethoxysilane, methyl trimethoxysilane; isocyanate silanes such as tris-[3-(trimethoxy-silyl)propyl]isocyanurate; gamma-mercaptopropyl trimethoxysilane, bis-(3-[triethoxysilyl]propyl)polysulphide, beta-(3,4-epoxycyclohexyl)-ethyl trimethoxysilane; silanes containing an epoxy group (epoxysilane), glycidoxy and/or a glycidoxypropyl group such as gamma-glycidoxypropyl trimethoxysilane, gamma-glycidoxypropyl triethoxysilane, gamma-glycidoxypropyl methyldiethoxysilane, (3-glycidoxypropyl) trimethoxysilane, (3-glycidoxypropyl)hexyl trimethoxysilane, beta-(3,4-epoxycyclohexyl)-ethyl triethoxysilane; silanes containing a vinyl group such as vinyl triethoxysilane, vinyl trimethoxysilane, vinyl tris-(2-methoxyethoxy)silane, vinylmefhyl dimethoxysilane, vinyl triisopropoxysilane; gamma-methacryloxypropyl trimethoxysilane, gamma-methacryloxypropyl triisopropoxysilane, gamma-methacryloxypropyl triethoxysilane, octyl trimethyloxysilane, ethyl trimethoxysilane, propyl triethoxysilane, phenyl trimethoxysilane, 3-mercaptopropyl triethoxysilane, cyclohexyl trimethoxysilane, cyclohexyl triethoxysilane, dimethyl dimethyloxysilane, 3-chloropropyl triethoxysilane, 3-methacryloxypropyl trimethoxysilane, i-butyl triethoxysilane, trimethyl ethoxysilane, phenyldimethyl ethoxysilane, hexamethyl disiloxane, trimethylsilyl chloride, vinyl triethoxysilane, hexamethyl disilizane, and mixtures thereof. US 4,927,749 discloses further suitable silane compounds which may be used in the present invention. The most preferred silane compounds, however, are epoxy silanes and silane compounds containing a glycidoxy or glycidoxypropyl group, particularly gamma-glycidoxypropyl triethoxysilane and/or gamma-glycidoxypropyl methyl diethoxysilane.

The silane-modified silica sol present in the coating composition according to the present invention preferably has a SiO₂/M₂O mole ratio of at least 6:1, more preferably of at least 10:1, even more preferably of at least 25:1, most preferably of at least 40:1, and can have a SiO₂/M₂O mole ratio of 200:1 or more, wherein M represents the total of alkali metal and ammonium ions. Further, it is possible to use a blend of two or more silica sols having a different SiO₂/M₂O mole ratio. The blend preferably has a SiO₂/M₂ mole ratio of at least 6:1, more preferably of at least 10:1, even more preferably of at least 25:1, most preferably of at least 40:1. The sol can be stabilised by alkali compounds such as sodium, potassium, or lithium hydroxide, quaternary ammonium hydroxide, or water-soluble organic amines such as alkanolamine.

In addition to the silane-modified silica sol, the coating composition according to the present invention can contain an unmodified silica sol or an alumina-modified silica sol. However, the amount of unmodified silica sol should be low enough to maintain a suitable pot life and low white rust formation. Additionally or alternatively, the coating composition can contain a minor amount of an alkali metal silicate such as lithium silicate, sodium-lithium silicate, or potassium silicate, an ammonium silicate, or a quaternary ammonium silicate. Other examples of suitable sol-silicate blends or mixtures can be found in US 4,902,442. The addition of an alkali metal or ammonium silicate may improve the initial film-forming properties of the coating composition, but the amount of alkali metal silicate should be low enough to have a SiO₂/M₂O of the binder sol of at least 6:1, preferably of at least 8:1, more preferably above 15:1, even more preferably above 25:1, and most preferably above 40:1. For the purpose of the present application, a minor amount of alkali metal silicate means that the weight ratio of alkali metal silicate to silane-modified silica sol in the composition is smaller than 0.5, preferably smaller than 0.25, more preferably smaller than 0.1.

The coating composition according to the present invention can also contain a dissolved or dispersed organic resin. The organic resin preferably is a latex, for example a styrene butadiene copolymer latex, a styrene acrylic copolymer latex, a vinyl acetate ethylene copolymer latex, a polyvinyl butyral dispersion, a silicone/siloxane dispersion, or an acrylic based latex dispersion. Examples of suitable latex dispersions that can be used include XZ 94770 and XZ 94755 (both ex Dow Chemicals), Airflex^{®} 500, Airflex^{®} EP3333 DEV, Airflex^{®} CEF 52, and Flexcryl^{®} SAF34 (all ex Air Products), Primal^{®} E-330DF and Primal^{®} MV23 LO (both ex Rohm and Haas), and Silres^{®} MP42E, Silres^{®} M50E, and SLM 43164 (all ex Wacker Chemicals). Water-soluble polymers such as acrylamide polymers can be used but are less preferred. The organic resin is preferably present in the coating composition in an amount of not more than 30 wt%, more preferably 2-15 wt%, based on the solids content of the film-forming components. The solids content of the film-forming components includes dry organic resin and dry silica sol; it does not include pigments, such as Zn powder or Zn alloy. Higher amounts of organic resin may cause weld porosity during subsequent welding. It was found that the addition of an organic resin improves the adhesion/cohesion of the cured coating as measured in the cross hatch test.

The coating composition according to the present invention further comprises zinc powder and/or a zinc alloy.
Suitable zinc powder preferably has a volume average mean particle size of 2 to 12 microns, and most preferably such zinc powder is the product commercially obtainable as zinc dust having a mean particle size of 2 to 8 microns. The zinc protects the steel by a galvanic mechanism and may also form a protective layer of zinc corrosion products, enhancing the corrosion protection given by the coating. All or part of the zinc can be replaced by a zinc alloy.
The amount of zinc powder and/or alloy in the coating generally is at least 10% and can be up to 90% by volume of the coating, on a dry film basis. The zinc powder and/or alloy can be substantially the whole of the pigmentation of the coating or can for example comprise up to 70%, for example 25 to 55%, by volume of the coating, on a dry film basis, with the coating also containing an auxiliary corrosion inhibitor, for example a molybdate, phosphate, tungstate or vanadate, as described in US 5,246,488, ultrafine titanium dioxide as detailed in KR 8101300, and/or zinc oxide and/or a filler such as silica, calcined clay, alumina silicate, talc, barytes, micaceous iron oxide, conductive extenders, (e.g. ferrophos), or mica. The amount of zinc powder and/or alloy in the coating preferably is between 35 and 60%, more preferably between 40 and 50% by volume on a dry film basis. In the wet coating composition, the amount of zinc powder and/or alloy preferably is between 35 and 60 wt%, more preferably 40-50 wt%, based on the total weight of the coating composition.

The solids content of the coating composition generally is at least 15% by volume and preferably in the range of 15 to 40%, more preferably in the range of 20 to 35% by volume. The volume solids content is the theoretical value calculated on the basis of all the solid components present in the coating composition. The coating composition preferably has a viscosity such that it can easily be applied by conventional coating applicators such as spray applicators, particularly airless spray or high volume low pressure (HVLP) spray applicators, to give a coating having a dry film thickness of less than 40 microns, preferably between 12 and 25 to 30 microns.

Preferably, the coating composition according to the invention has a pH in the range of 8 to 11.5, more preferably in the range of 9 to 11. While we do not wish to be bound by any theory explaining the pH effect on the film properties, it appears that an increased pH results in an increased amount of silica ions and/or silicate ions in solution. This seems to have the potential for effecting *in situ* gel reinforcement after the application of the coating composition. Additionally, pH adjustment can have a minor pot life-extending effect. When a commercially obtainable silica sol is used, a sol with a high pH can be selected and/or the pH of the sol can be adjusted. The pH can be adjusted, for example, by adding dilute sulphuric acid or sodium hydroxide or by adding pH-influencing pot life extenders such as dimethyl aminoethanol (DMAE). For example, commercially obtainable 22 nm silica sols normally have a pH of about 8.5-9. Increasing the pH of these sols to 10-11 markedly improves the rate of coating property development.

Optionally, the coating composition may comprise further additives well-known to the skilled person, e.g., thixotropes and/or rheology control agents (organo-clays, xanthan gum, cellulose thickeners, polyether urea polyurethanes, (pyrogenic) silica, acrylics, etc.), defoamers (in particular when latex modifiers are present), and, optionally, secondary pot life extenders, such as chromates (for example sodium dichromate) or tertiary amines (for example triethylamine or dimethyl aminoethanol). Preferred thixotropes and/or rheology control agents include Bentone^{®} EW (ex Elementis), which is a sodium magnesium silicate (organoclay), Bentolite^{®} WH (ex Rockwood), which is a hydrous aluminium silicate, Laponite^{®} RD (ex Rockwood), which is a hydrous sodium magnesium lithium silicate, HDK^{®}-N20 (ex Wacker Chemie), which is a pyrogenic silica, and Rheolate^{®} 425 (ex Elementis), which is a proprietary acrylic dispersion in water. Preferred defoamers include Foamaster^{®} NDW (ex Cognis), Tego Foamex^{®} 88 (ex Tego Chemie), and Dapro^{®} 1760 (ex Elementis). It was found that other compounds which may be present in the coating composition for other reasons can also act as secondary pot life extenders. For example, the addition of molywhite anticorrosive pigments can lead to a minor extension of the pot life. Preferred secondary pot life extenders are tertiary amines, which offer a chromate-free option for pot life extension.

Preferably, the pigment volume concentration (PVC) of the coating composition is between 40 and 75%. Coating compositions comprising a silica sol with a large average particle size require a lower PVC than coating compositions comprising a silica sol with a smaller average particle size. With a PVC above 75% the film properties are reduced, and below 40% there is insufficient zinc to provide effective long term - i.e. at least 6 months - corrosion protection.
The pigment volume concentration (PVC) is the volume percentage of pigment in the dry paint film. In the context of the current specification, a pigment is defined as any solid component other than the film-forming components. Silica sol and organic resin are regarded as film-forming components. The critical pigment volume concentration (CPVC) is normally defined as the pigment volume concentration where there is just sufficient binder to provide a completely adsorbed layer of binder on the pigment surfaces and to fill all the interstices between the particles in a close-packed system. The critical pigment volume concentration can be determined by wetting out dry pigment with just sufficient linseed oil to form a coherent mass. This method yields a value known as the "oil absorption", from which the critical pigment volume concentration can be calculated. The method for determining the oil absorption is described in British Standard 3483 (BS3483).

The coating composition according to the invention can be provided as a two (or more) pack system where the contents of the two (or more) packs are thoroughly mixed prior to application of the coating. A first pack may contain the silica sol and the optional organic resin, zinc powder and/or alloy being present in a second pack in dry form. This prevents the zinc powder and/or alloy from reacting with water during storage.

It is also possible to prepare the coating composition just prior to its application, for example by adding and thoroughly mixing all ingredients of the coating composition shortly before application. Such a process can also be referred to as on-line mixing of the components in the coating composition.

The development of the film properties of an applied layer of the coating composition can be accelerated by a post-treatment process in which the substrate can be treated with a solution which increases the film strength of the coating. In that case, a preferred method is as follows: a metal substrate is primer coated with the coating composition according to the invention, and after the primer coating has dried to the extent that it is touch dry, it is treated with a film strengthening solution. Such a solution, which increases the film strength of the primer coating, can in general be an aqueous solution of an inorganic salt or a solution of material having reactive silicon-containing groups.

The amount of film strength-enhancing solution optionally applied to the primer coating generally is in the range 0.005-0.2, preferably 0.01-0.08 litres per square metre of primer coated surface (L/m²) for coatings applied at standard dry film thickness (15-20 µm). Such an amount of solution can conveniently be applied by spraying. Needless to say, the concentration or the volume of the post-treatment solution should be increased if the coating is over-applied, i.e. in a dry film thickness > 20 µm.

When the optionally applied film strength-enhancing solution is an aqueous solution of an inorganic salt, it generally has a concentration of at least 0.01 M and preferably of at least 0.03M. The concentration of the inorganic salt solution can be up to 0.5M or 1 M or even higher. The inorganic salt can be the salt of a monovalent cation such as an alkali metal or ammonium salt, of a divalent cation such as zinc, magnesium, calcium, copper (II) or iron (II), of a trivalent cation such as aluminium or cerium (III), or of a tetravalent cation such as cerium (IV), and of a monovalent anion such as a halide, for example fluoride, chloride or bromide, or nitrate, or a polyvalent anion such as sulphate or phosphate. Mixtures of the above-mentioned salts can also be used. Examples of inorganic salt solutions which have been found effective are magnesium sulphate, zinc sulphate, potassium sulphate, aluminium sulphate, iron sulphate, cerium (IV) sulphate, copper sulphate, sodium chloride, and potassium chloride, although chlorides might not be preferred because of their tendency to promote corrosion of the steel substrate. The use of zinc sulphate or aluminium sulphate is preferred. The concentration of the inorganic salt solution in weight terms preferably is in the range of 0.5-20% by weight.

When the optionally applied film strength-enhancing solution is an aqueous solution of a material having reactive silicon-containing groups, it may comprise silicate as a material having active silicon-containing groups. The film strength-enhancing solution can be an alkali metal silicate solution, for example potassium silicate or lithium silicate, or an ammonium silicate solution or it can be an alkali metal siliconate, for example an alkyl siliconate solution. The preferred concentration of such a solution is in the range of 0.5-20 wt%.

The development of the film properties of an applied layer of the coating composition can alternatively be accelerated by immersion of the optionally post-treated coated substrate in water, or by conditioning the optionally post-treated coated substrate in an atmosphere with a relative humidity of at least 50%, preferably at least 80%. Preferably, a metal substrate is primer coated with a coating composition according to the invention, and after the primer coating has dried to the extent that it is touch dry, it is immersed in water or alternatively kept in an atmosphere with a relative humidity of at least 80%, more preferably at least 50%. Alternatively, a metal substrate is primer coated with a coating composition according to the invention, and after the primer coating has dried to the extent that it is touch dry, it is first treated with a film strengthening solution and then immersed in water or alternatively kept in an atmosphere with a relative humidity of at least 80%, more preferably at least 50%.

When fast development of the film properties is not an issue, it is possible to let at non-post-treated coating dry at low relative humidity, for instance between 25 and 50% relative humidity. The development of the coating properties will proceed less fast, but eventually good coating properties are obtained.

Coating compositions according to the present invention have good overcoating characteristics, including when weathered, with a range of epoxy primers.

### EXAMPLES

Coating compositions according to the present invention were prepared as follows:
In a first step a pre-hydrolysed silane was prepared by adding 1,000 g of Silquest A-187 (glycidoxy-containing epoxy-silane, ex GE Silicones) to about 50 to 70 g of a pre-hydrolysed silane heel in a 3 L beaker. 1,000 g of deionised water were added under moderate agitation. This agitation continued for about 1 hour. A clear mixture of pre-hydrolysed silane was obtained.

During the hydrolysis of silane heat was developed, leading to a temperature increase of about 5-10°C. The temperature of the pre-mix was kept below 35°C to prevent self-condensation of the silane. This self-condensation can be observed as an increase in turbidity. The pH of the pre-mix was neutral, i.e. about 7. The pre-mix normally was stable for a couple of months.

In a next step a modified silica sol was prepared by heating 5,000 g of Bindzil 30/360 (unmodified 7 nm silica sol, ex Akzo Nobel (Eka Chemicals)) to 60°C in a 5 L glass reactor. The pre-mix was added to the sol under good agitation with rate of 2.2 molecules/nm²/hr, the amount of pre-mix depending on the desired extent of silane modification. After the addition was finished, the mixture was poured into a 5 L plastic drum and left to cool to room temperature (about 30 minutes).
The total amount of silane added to the silica sol was varied between 2 and 20 wt% of silane per silica sol, based on dry weight.
During the reaction of the silane with the sol the pH increased about 0.5 units. A sharp decrease in specific surface area of the sol (as measured by the titration method described in G.W. Sears, Analytical Chemistry, Vol 28(12), pp. 1981-1983 (1956)) could be observed, indicating reaction of the silane with the silanol surface groups on the sol.

The resulting silane-modified silica sol was combined with other coating ingredients in order to obtain the following coating composition:

| Material | wt.% |
|---|---|
| Silane-modified silica sol (30 wt% sol) | 27.60 |
| Bentone^{®} EW (a bentonite clay, ex Elementis) | 0.35 |
| Water | 14.60 |
| Defoamer | 0.10 |
| XZ 94770^{®}, (a styrene/butadiene organic latex of 50 vol.% solids, ex Dow Chemicals) | 1.69 |
| Molywhite^{®} 212 (calcium zinc molybdate, an anticorrosive pigment of particle size 4.1 µm, ex Sherwin Williams) | 6.12 |
| Huber 2000C^{®} (a calcined aluminosilicate) | 1.14 |
| Zinc dust (a 7 µm mean particle size metal powder, ex Trident Alloys) | 28.35 |

To measure the pot life of coating compositions with different extents of silane modification, the coating compositions were applied on steel substrates and stored at 23°C, 60% RH (relative humidity). Different time intervals between mixing the ingredients and application on the substrate were used. 24 hours after application, the coatings were tested for their abrasion resistance (Wet Double Rub test; WDR).
In the Wet Double Rub test, the coated surface is wetted with a couple of drops of water and then rubbed with a cotton wool swab using light pressure. One pass to and fro is a double rub. The results are expressed as the number of double rubs till removal of the coating. If the coating survives 100 double rubs, the final dry film thickness (dft) is compared to the initial value. If the dry film thickness is reduced by more than 25%, the result is expressed as >100. If the dry film thickness is reduced by less than 25%, the result is expressed as >> 100.
The results of the tests are listed in Table 1.

Two compositions were used as control: (i) a composition comprising the same silica sol but without silane modification and (ii) a composition according to WO 03/022940 wherein Silquest A-187 (in an amount equivalent to 14 wt% silane modification) was simply added in less than one minute (addition rate: about 60-100 silane molecules/nm²/hr) to a mixture of the unmodified silica sol, Bentone® EW, and XZ 94770 latex using a low stirring rate, after which the mixture was left to stand for 24 hours before mixing in the other compounds. The latter procedure resulted in a sol with visible cloudiness (probably attributed to self-condensation of the silane or bridging flocculation of the sol particles).

**Table 1: WDR, 24 hours after application**

| % silane | Time between mixing and application on substrate: | | | | | |
|---|---|---|---|---|---|---|
| | - (fresh) | 1 hour | 2 hours | 4 hours | 6 hours | 24 hours |
| 0 (comparative) | 7 | n.d.* | n.d.* | n.d.* | n.d.* | n.d.* |
| 8 | >100 | >100 | >100 | >100 | >100 | >100 |
| 10 | >100 | >100 | >100 | >100 | >100 | >100 |
| 12 | >100 | >100 | >100 | >100 | >100 | >100 |
| 14 | >100 | >100 | 100 | 100 | >100 | >100 |
| 14 (added, no modification; comparative) | >100 | 70 | 60 | 69 | n.d.* | n.d.* |

| | | | | | | |
|---|---|---|---|---|---|---|
| * not determined, because the coating composition had gelled to an extent which prevented its application to the surface. | | | | | | |

These results show that the coating compositions according to the invention have a pot life of more than 24 hours and show good film properties. The control composition without silane and the control composition wherein silane was added very quickly had a significantly shorter pot life.

The control composition wherein 14% silane was quickly added was subjected to the same tests 2 and 4 weeks after silane addition in order to see whether the properties would improve upon storage (due to the silane reacting slowly with the sol surface). The results show, however, that the opposite happened: the sol became less stable during storage, as shown in Table 2 below.

**Table 2: WDR, 24 hours after application of the control composition in which 14% silane was Quickly added to the silica sol**

| | Time between mixing and application on substrate: | | | | |
|---|---|---|---|---|---|
| | - (fresh) | 1 hour | 2 hours | 4 hours | 6 hours |
| Week 2 | 43 | 90 | 52 | 41 | n.d.* |
| Week 4 | 6 | 8 | 5 | 4 | n.d.* |

| | | | | | |
|---|---|---|---|---|---|
| * not determined, because the coating composition had gelled to an extent which prevented its application to the surface. | | | | | |

The white rust resistance was determined under extreme conditions by keeping the coated substrates for 24 hours in a condensation chamber at an angle of 45° above a water bath of 45°C. During this test, water vapour condenses on the coated substrates and the condensed water slides along the substrate back into the water bath.
After 24 hours, the coated substrates were visually inspected for white rust formation. The level of white rust refers to the percentage of surface area covered with white rust. The results are displayed in Table 3. A substrate coated with an unmodified silica sol-containing coating was used as control.

**Table 3: White rust resistance**

| Silane (wt%) | White rust level (%): |
|---|---|
| 0 | 50-75 |
| 2* | 50 |
| 8 | 10 |
| 10 | 10 |
| 12 | 5 |
| 14 | 1 |
| 20* | < 0.1 |

| | |
|---|---|
| *comparative | |

This Table shows that the compositions according to the present invention show improved white rust resistance. The best results were obtained with silica sols modified with 14-20 wt% of the silane compound. Even after outdoor exposure for five months, no white rust was observed on these coatings.

The coating composition containing the silica sol modified with 20 wt% of silane compound, however, was prone to red rust formation, apparently due to the coating composition falling off the substrate due to reduced film properties.

## Claims

1. Coating composition suitable for coating a metal, preferably steel, substrate which is intended to be fabricated and overcoated, said composition comprising (i) zinc powder and/or a zinc alloy and (ii) a modified silica sol comprising colloidal silica particles modified with 8-18 wt% of one or more silane compound(s), based on the combined dry weight of silane compound(s) and colloidal silica particles, and being obtainable by adding said sitane compound(s) to a silica sol with a rate of not more than 20 silane molecules per nm² colloidal silica surface per hour, and wherein said one or more silane compound(s) is/are pre-hydrolysed.

2. A coating composition according to claim 1 wherein the silane compound(s) are added to the silica sol with a rate of not more than 5 silane molecules per nm² colloidal silica surface per hour.

3. A coating composition according to claim 1 or 2 wherein the silane compound(s) are added to the silica sol at a temperature of at least 50°C.

4. A coating composition according to any one of the preceding claims wherein at least 60 wt% of the silane compounds present in the silica sol is bound or linked to the surface of colloidal silica particles.

5. A coating composition according to any one of the preceding claims wherein the silica sol is additionally modified with alumina.

6. A coating composition according to any one of the preceding claims wherein the silica sol modified with one or more silane compounds has a SiO₂/M₂O mole ratio of at least 6:1, wherein M represents the total of Alkali metal and ammonium ions.

7. A coating composition according to any one of the preceding claims wherein the colloidal silica particles in the silica sol modified with one or more silane compounds have an average particle diameter between 3 and 22 nm.

8. A coating composition according to any one of the preceding claims wherein the silane compound is an epoxy-functional silane compound.

9. A coating composition according to any one of the preceding claims further comprising up to 30 wt% of an organic resin, based on the solids content of the film-forming components.

10. A coating composition according to any one of the preceding claims having a pH in the range 9 to 11.

11. A process for the preparation of a coating composition according to any one of the preceding claims, comprising the steps of
(i) adding at least one pre-hydrolysed silane compound to a silica sol with a rate of not more than 20 silane molecules per nm² colloidal silica surface per hour to form a silane-modified silica sol, and
(ii) adding zinc and/or zinc alloy and optionally other components to the silane-modified silica sol.

12. Metal substrate coated with a coating composition according to any one of claims 1-10.

## Patentansprüche

1. Beschichtungszusammensetzung, geeignet zum Beschichten eines Metallsubstrats, vorzugsweise eines Stahlsubstrats, das hergestellt und beschichtet werden soll, wobei die Zusammensetzung folgendes aufweist: (i) Zinkpulver und/oder eine Zinklegierung und (ii) eine modifizierte Silica-Sole mit kolloidalen Silicapartikeln, modifiziert mit 8-18 Gew.-% einer oder mehrerer Silanverbindung(en), basierend auf dem kombinierten Trockengewicht der Silanverbindung(en) und der kolloidalen Silicapartikel, und die durch Zufügen der Silanverbindung(en) zu einer Silica-Sole mit einer Rate von nicht mehr als 20 Silanmolekülen pro nm² kolloidale Silicaoberfläche pro Stunde erhältlich ist, und wobei eine oder mehrere Silanverbindung(en) prähydrolysiert ist/sind.

2. Beschichtungszusammensetzung nach Anspruch 1, wobei die Silanverbindung(en) der Silica-Sole mit einer Rate von nicht mehr als 5 Silanmolekülen pro nm² kolloidale Silicaoberfläche pro Stunde zugefügt werden.

3. Beschichtungszusammensetzung nach Anspruch 1 oder 2, wobei die Silanverbindung(en) der Silica-Sole bei einer Temperatur von mindestens 50°C zugefügt werden.

4. Beschichtungszusammensetzung nach einem der vorhergehenden Ansprüche, wobei mindestens 60 Gew.-% der in der Silica-Sole vorhandenen Silanverbindungen an die Oberfläche der kolloidalen Silicapartikel gebunden oder mit ihr verknüpft sind.

5. Beschichtungszusammensetzung nach einem der vorhergehenden Ansprüche, wobei die Silica-Sole zusätzlich mit Aluminiumoxid modifiziert ist.

6. Beschichtungszusammensetzung nach einem der vorhergehenden Ansprüche, wobei die mit einem oder mehreren Silanverbindung(en) modifizierte Silica-Sole ein SiO₂/M₂O-Molverhältnis von mindestens 6:1 besitzt, wobei M die Gesamtmenge an Alkalimetall- und Ammoniumionen darstellt.

7. Beschichtungszusammensetzung nach einem der vorhergehenden Ansprüche, wobei die kolloidalen Silicapartikel in der mit einer oder mehreren Silanverbindung(en) modifizierten Silica-Sole einen durchschnittlichen Partikeldurchmesser zwischen 3 und 22 nm haben.

8. Beschichtungszusammensetzung nach einem der vorhergehenden Ansprüche, wobei die Silanverbindung eine epoxyfunktionelle Silanverbindung ist.

9. Beschichtungszusammensetzung nach einem der vorhergehenden Ansprüche, weiterhin aufweisend bis zu 30 Gew.-% eines organischen Harzes, basierend auf dem Feststoffgehalt der filmbildenden Bestandteile.

10. Beschichtungszusammensetzung nach einem der vorhergehenden Ansprüche mit einem pH-Wert in dem Bereich von 9 bis 11.

11. Verfahren für die Herstellung einer Beschichtungszusammensetzung nach einem der vorhergehenden Ansprüche, das die folgenden Schritte aufweist:
(i) Hinzufügen von mindestens einer prähydrolysierten Silanverbindung zu einer Silica-Sole mit einer Rate von nicht mehr als 20 Silanmolekülen pro nm² kolloidale Silicaoberfläche pro Stunde, um eine silan modifizierte Silica-Sole herzustellen, und
(ii) Hinzufügen von Zink und/oder einer Zinklegierung und wahlweise anderen Bestandteilen zu der silan modifizierten Silica-Sole.

12. Metallsubstrat, das mit einer Beschichtungszusammensetzung nach einem der Ansprüche 1-10 beschichtet ist.

## Revendications

1. Composition de revêtement appropriée pour revêtir un substrat métallique, de préférence en acier, qui est destiné à être fabriqué et recouvert d'une surcouche, ladite composition comprenant (i) de la poudre de zinc et/ou un alliage de zinc et (ii) un sol de silice modifié comprenant des particules de silice colloïdale modifiées par 8 à 18% en poids d'un ou de plusieurs composé(s) de silane, sur la base du poids sec combiné du/des composé(s) de silane et des particules de silice colloïdale, et susceptible d'être obtenue par l'ajout dudit ou desdits composé(s) de silane à un sol de silice avec un taux ne dépassant pas 20 molécules de silane par nm² de surface de silice colloïdale par heure, et où ledit ou lesdits plusieurs composé(s) de silane est/sont pré-hydrolysé(s).

2. Composition de revêtement selon la revendication 1, dans laquelle le/les composé(s) de silane est/sont ajouté(s) au sol de silice avec un taux ne dépassant pas 5 molécules de silane par nm² de surface de silice colloïdale par heure.

3. Composition de revêtement selon la revendication 1 ou 2, dans laquelle le/les composé(s) de silane est/sont ajouté(s) au sol de silice à une température d'au moins 50°C.

4. Composition de revêtement selon l'une quelconque des revendications précédentes, dans laquelle au moins 60% en poids des composés de silane présents dans le sol de silice sont liés ou attachés à la surface de particules de silice colloïdale.

5. Composition de revêtement selon l'une quelconque des revendications précédentes, dans laquelle le sol de silice est en outre modifié par de l'alumine.

6. Composition de revêtement selon l'une quelconque des revendications précédentes, dans laquelle le sol de silice modifié par un ou plusieurs composé(s) de silane a un rapport molaire SiO₂/M₂O d'au moins 6:1, où M représente le total des ions de métal alcalin et d'ammonium.

7. Composition de revêtement selon l'une quelconque des revendications précédentes, dans laquelle les particules de silice colloïdale dans le sol de silice modifié par un ou plusieurs composé(s) de silane ont un diamètre moyen de particules compris entre 3 et 22 nm.

8. Composition de revêtement selon l'une quelconque des revendications précédentes, dans laquelle le composé de silane est un composé de silane à fonction époxy.

9. Composition de revêtement selon l'une quelconque des revendications précédentes, comprenant en outre jusqu'à 30% en poids d'une résine organique, sur la base de la teneur en matières solides des composants filmogènes.

10. Composition de revêtement selon l'une quelconque des revendications précédentes, ayant un pH dans la plage allant de 9 à 11.

11. Procédé pour la préparation d'une composition de revêtement selon l'une quelconque des revendications précédentes, comprenant les étapes qui consistent :
(i) à ajouter au moins un composé de silane pré-hydrolysé à un sol de silice avec un taux ne dépassant pas 20 molécules de silane par nm² de surface de silice colloïdale par heure pour former un sol de silice modifié par un silane, et
(ii) à ajouter du zinc et/ou un alliage de zinc et facultativement d'autres composants au sol de silice modifié par un silane.

12. Substrat métallique revêtu d'une composition de revêtement selon l'une quelconque des revendications 1 à 10.
